# EUROPEAN PATENT APPLICATION

(11) **EP 4 672 798 A1**
(43) Date of publication of application: **31.12.2025**
(21) Application number: 25185387.5
(22) Date of filing: 26.06.2025
(51) Int. Cl.: H04W 12/30, H04W 24/00

(54) **MANAGING SYSTEM FOR ESIM PROFILES, TEST SYSTEM FOR A MOBILE NETWORK INCLUDING SUCH MANAGING SYSTEM, METHOD TO DOWNLOAD AN ESIM PROFILE USING SUCH MANAGING SYSTEM OR SUCH TEST SYSTEM AND METHOD TO TEST A MOBILE NETWORK INCLUDING THE DOWNLOAD METHOD**

(30) Priority: 27.06.2024 DE 102024206004
(71) Applicant: Mobileum Inc., Cupertino, California 95014 (US)
(72) Inventor: Schultz, Christian, 1087BV Amsterdam (NL); Stangl, Mathias, 90473 Nürnberg (DE); Donath, Norbert, 91207 Lauf a.d. Pegnitz (DE); Deutsch, Christian, 90482 Nürnberg (DE)
(74) Representative: Rau, Schneck & Hübner Patentanwälte Rechtsanwälte PartGmbB

(57) **Abstract**

A managing system (7) for eSIM profiles has at a central site (8), an eUICC unit (9) and a central unit (CU, 10). The eUICC unit (9) is capable to host a multitude of eUICC cards (11). The eUICC unit (9) is in signal connection with a selectable download assistant module (12). The central unit (10) is in connection with the eUICC unit (9) to manage the eUICC unit (9). The download assistant module (12) is embodied to establish a connection with a network component (16) of a mobile network (2) at a local site. The local site (5) is connected to the central site (8) via an internet connection (18). A managing system results having enhanced capabilities for managing eSIM profiles. The managing system may be part of a test system further having at least one test probe (26) being in signal connection with the central unit (10) of the managing system (7).

## Description

The invention relates to a managing system for eSIM profiles. Further, the invention relates to a test system for a mobile network including such a managing system, to a method to download an eSIM profile from a mobile network operator to an eUICC card using such managing system or such test system and relates to a method to test a mobile network including the download method.

Test systems for mobile networks are known e.g. from WO 2021/058 305 A1, form US 11,843,960 B2, from DE 100 11 986 A1, from US 10,097,981 B1, from US 7,831,249 B2 and from WO 2004/049746 A1. US 2019/0075448 A1 discloses a monitoring of embedded subscriber identity modules. WO 2016/013827 A1 discloses a method and a device for embedded SIM provisioning. WO 2017/013127 A1 discloses a method for detecting remote access of a universal integrated circuit card.

It is an object of the invention to enhance the capabilities of such a system for managing eSIM profiles or for testing mobile networks with remote eSIM provisioning.

This object is met by a managing system including the features of claim 1 and by a test system including the features of claim 5.

The SIM has been a component of mobile communication systems since their inception and is present in any mobile device that accesses a mobile network. It is also a key part of active test and measurement systems for mobile networks. Such systems typically use hardware and software that enables the spatial decoupling of the SIM card from the UE to facilitate distributed testing and simplify SIM card management. This combination of hardware and software is sometimes defined as SIM Multiplexing, while the hardware is sometimes known as a SIM Multiplexer. Such a SIM Multiplexer for example is known from US 8,688,167 B2.

The hardware component (SIM Multiplexer) is used to host several SIM cards, in classical form factors, e.g. 2FF, 3FF, 4FF, while the software component is used to connect the UE with the SIM over IP connectivity, making it appear to the UE as the SIM card is physically present in the device.

In recent years, eSIMs are being introduced by device manufacturers and mobile network operators. The eSIM separates the SIM hardware from the SIM subscription profile. eSIM enabled devices allow users to download or change subscriptions without the need to physically swap the SIM card in the device. This process is standardized by GSMA under the umbrella of Remote SIM Provisioning (RSP) and includes several standards, namely SGP.02 M2M, SGP.22 Consumer and SGP.32 IoT each with their particular features.

The emergence of eSIM requires changes in the methods with which active test systems manage such eSIMs and use them for distributed testing with eSIM multiplexing. Furthermore, methods to test the RSP process with eSIM multiplexing are required.

Particularly, the managing system and the test system may provide:
- Components for hosting eUICCs and their respective profiles in a centralized location, which will be referred to as an eSIM Multiplexer or an eUICC unit;
- A method for downloading and managing eSIM profiles via a central (software running on same device where the eUICC is located) and/or local download assistant module, i.e. LPA/IPAd (running on different devices and/or geographical locations wrt. eUICC location and/or test probe location) to a target eUICC in the eSIM Multiplexer;
- A method for downloading and managing eSIM profiles to a target eUICC in the eSIM Multiplexer with the possibility to originate download requests from different geographical locations from which the download is being performed;
- A method for testing the RSP process for consumer eSIMs (SGP.22) and IoT (SGP.32);
- A method for testing mobile services in geographically distributed locations using eSIMs hosted in a centralized location (eSIM Multiplexer);
- A method for testing the RSP process with eUICCs featuring an embedded IPAe.

The managing system according to claim 1 enables a masking of a geo location of the download assistant module at the central site. As a consequence, the geo location of the download assistant module 12, in particular the IPA/LPA and an optional VPN client module as determined by the network component of the mobile network, in particular by a SM-DP+ module, appears to be the location of the local site, e.g. the location of a local proxy server. A managing or testing of local components of a mobile network located at the local site, in particular located at a specific transmitting region within the local site, is possible with core components located at the central site. In particular, the eUICC unit can be arranged at the central site.

The download module is selectable via a respective selection operation of the managing system. Such selection operation may be initiated by the eUICC unit. To perform such selection operation, the managing system and in particular the central unit or the eUICC unit may include a selection module.

The download assistant module may cooperate with a VPN client module to establish a VPN connection between the managing system and a local proxy server at the local site. A geo location of the VPN client module at the central site in that case may be masked by the local proxy server. Such VPN connection may be established to tunnel traffic to network elements or network components. Such network elements or network components may be operated by the mobile network operator.

All the signal/data connections described herein may be realized as wireless connections. Such signal/data connection may be an IP connection which may be established permanent or non-permanent. Such signal/data connection may be realized as a VPN (virtual private network) connection.

A user terminal according to claim 2 facilitates operating the managing system. A user terminal not necessarily needs to be located at the central site.

Download assistant modules according to claims 3 or 4 have proven to be of particular advantage. The respective download module may operate with or may use a VPN client module as described above. The VPN client module may be, depending on its application, realized alongside the download assistant module, in particular an IoT profile assistant (IPA).

As mentioned above, the managing system may use a VPN connection. VPN connections comprising VPN clients and servers are used to change the apparent geographic location of the source of IP traffic. Routing traffic between a Local profile assistant (LPA) or an IoT profile assistant (IPAd/IPAe) and the network elements involved in eSIM provisioning through such VPN can be used to change the apparent location.

The advantages of a test system according to claim 5 correspond to those described above with respect to the managing system. The at least one test probe of the test system may be located at the central site and/or may be located at the local site. The test probe in particular may simulate/emulate a mobile device, including a smartphone or an IoT module. The test probe may simulate/emulate an M2M, consumer or other mobile device.

A signal connection according to claim 6 facilitates test routines using the eSIM profile downloaded to designated eUICC cards hosted by the eUICC unit.

A configuration according to claim 7 enables establishing a VPN connection directly between the test probe and at least one component located elsewhere, e.g located at the local site. This is of particular advantage in case the test probe is located at the central site.

Test probe locations according to claims 8 and 9 have proven to be of particular advantage, depending on the respective application.

The advantages of a method according to claim 10 correspond to those already discussed above with respect in particular to the managing system. By use of such download method, the geo location of the download assistant module of the eUICC unit and/or of the test probe and/or of the eUICC card itself is masked by the local proxy server. An ordering of the eSIM profile may be done by providing information of the network component operated by the mobile network operator, e.g. a SM-DP+ address or an activation code or via a QR code upload.

The established connection may be a VPN connection between a VPN client module of the managing system and a local proxy server. The ordered eSIM profile may be downloaded from an SM-DP+ module or an eSIM IoT Manager (eIM) or a subscription manager discovery service (SM-DS) of the mobile network.

A method according to claim 11 has been proven to be particularly useful. Alternatively or in addition, a Local Profile Assistant (LPA) or a IoT Proile Assistant (IPA) optionally accompanied by a VPN client module may be used. The counter part, i.e. the network component operated by the mobile network operator may be implemented at any Mobile Network Operator in the form of a combination of one or more of SM-DP+, SM-DS and eSIM module on the network operator site.

The advantages of a test method according to claim 12 correspond to those discussed above in particular with respect to the test system and with respect to the download method. The test method steps which are performed during such test method include testing the download method and further may include test steps regarding the quality of the data connection between the test probe and the mobile network. Those test steps can be monitored during the test method. A result of such monitoring and an optional analysis is recorded in particular as the at least one key parameter indicator.

A VPN connection establishment according to claim 13 avoids the need to have the test probe at the local site even in case of locally specific mobile network requirements. The VPN connection may be established with a local proxy server. Such local proxy server may be located at the site of the mobile network.

The eSIM profile is a personalized data set with accompanying software, i.e. data assigned to an allocated user, of an embedded universal integrated circuit card (eUICC). Such software includes at least one cellular service subscription profile. An RSP process may be tested using the test method. Such RSP process may be used for consumer devices, for example, smartphones, smartwatches, wearables, and/or for M2M (Machine to Machine) devices. The test method verifies in particular mobile network connectivity and services. Ordering of the eSIM profile from the RSP platform may be done manually or automatically. A sender of the order may be a mobile network operator (MNO). Prior to the ordering, the RSP process may be initiated. During the test method, a previous working profile or a bootstrap profile initially installed on the eUICC may be disabled and the downloaded eSIM profile is enabled. The checking may be performed via monitoring of the occurrence of at least one fail criterion. Such fail criteria may be fulfilled on the basis of an RSP platform connection timeout and/or of a network attach timeout and/or based on an expected structure of an ordering, of a triggering and/or of a downloading, and/or based on a timeout of a reattach of a device with the downloaded, updated eSIM profile.

The test probe may support a large frequency spectrum on the licensed bands, including 2G, 3G, 4G, 5G and higher generation radio frequencies for terrestrial and non-terrestrial use. The test probe may support cellular data connectivity, Supplemental Services, SMSoNAS (SMS over NAS (Non-Access Stratum)) for 4G and 5G technologies. The test probe may support SMSoIP (SMS over Internet Protocol) for IMS (IP Multimedia Subsystem) technology. The test probe may be configured to communicate with industrial IoT applications. An example for such industrial IoT applications is LTE-M (Long-Term Evolution for Machines). Another example is NB-IoT (Narrow Band Internet of Things). The test probe may be configured to communicate with at least one low power wide area network (LPWAN) radio technology standard.

The test probe may be configured to test user transaction related test criteria, i.e. to test the RSP verification process at a user level. During such user level test, the test probe may initiate quality test steps by checking quality parameters which may be defined by key parameter indicators (KPIs). Such KPIs may be an access failure ratio, an access time, a MOS score for voice quality, a download start duration, a download availability ratio etc. Such quality parameters may be checked via the test probe in real time. In that respect, the test probe may be configured to emulate a real user behavior of the user of the smartphone and/or the consumer IoT device.

Examples for a consumer IoT device are a tablet, a smart watch, a wearable computer, e.g. smart glasses, a home voice controller, a door bell cam, a smart lock, a smart light switch, an air quality monitor etc.

Embodiments of the invention are hereinafter described with reference to the accompanying drawings. These drawings show:
- Fig. 1: schematically main components of a test system for a mobile network including a managing system for eSIM profiles;
- Fig. 2: in a schematic depiction similar to Fig. 1 a further embodiment of the test system; and
- Fig. 3: in a schematic depiction similar to Fig. 1 an embodiment of the managing system for eSIM profiles.

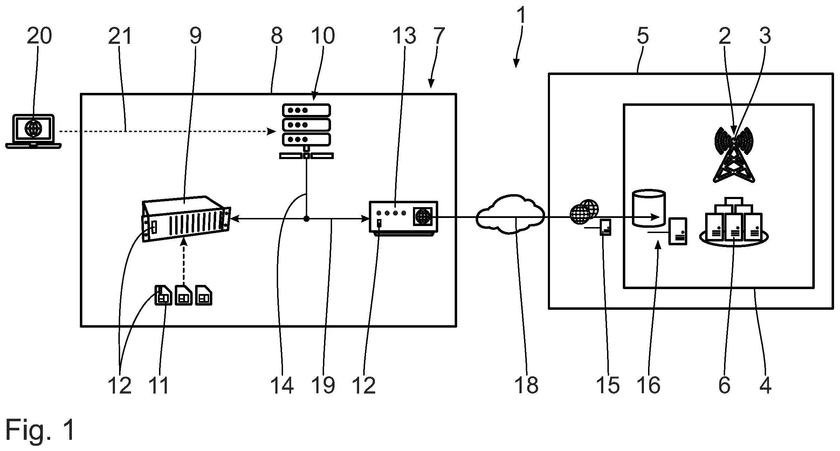

Fig. 1 shows a test system 1 for a mobile network 2. The mobile network 2 has a plurality of transmitting stations 3 one of which is shown in Fig. 1.

This transmitting station 3 is located covering a certain transmitting region 4 within a local site 5. The local site 5 may be a certain country, e.g. Germany, the USA, a certain state of the USA, South Africa or another local site which corresponds to a local contractual region of a certain mobile network operator 6, i.e. T-Mobile, AT&T, Vodafone, ...

The test system 1 includes a managing system 7 for eSIM profiles which are under control of the respective mobile network operator 6.

The managing system includes certain units at a central site 8, i.e. a basic location controlled by a company providing testing services. In particular, the central site 8 may be the location of a test data center.

At this central site 8, the managing system 7 has an eUICC unit 9 and a central unit (CU) 10. The eUICC unit 9 is capable to host a multitude of eUICC cards 11.

The eUICC unit 9 contains or is in signal connection with a selectable download assistant module 12. Such selectable download assistant module 12 may be a Local Profile Assistant (LPA) or alternatively a IoT Proile Assistant (IPA). Such download assistant module 12 may be configured to cooperate with a VPN client module. Such VPN client module may be part of the download assistant module. The eUICC unit 9 is configured such that selection of the respective one of the selectable download assistant modules can be selected. Such selection depends on the system configuration. To perform such selection operation, the managing system and in particular the central unit or the eUICC unit may include a selection module.

In the embodiment of Fig. 1, one embodiment of such LPA/IPA with optional VPN client module 12 is part of the eUICC unit 9 itself. Alternatively or additionally, such LPA/IPA with optional VPN client module 12 may be part of a test probe 13 of the test system 1 which in the Fig. 1 embodiment also is located at the central site 8. In a further variant, the LPA/IPA with optional VPN client module 12 may be, alternatively or in addition, part of the respective eUICC unit 11 as is also depicted in Fig. 1.

The central unit 10 is via a signal line 14 in signal/data connection with the eUICC unit 9 to manage this eUICC unit 9.

At the local site 5, the managing system 7 may have a local proxy server 15 to establish a VPN connection towards from the respective VPN client module 12.

The Mobile Operator 5 may operate a Subscription Manager Data Preparation plus (SM-DP+) module 16, and optionally an eSIM IoT Manager (eIM) and optionally an Subscription Manager Discovery Service (SM-DS). The SM-DP+ module 16 is via an IP (Internet Protocol) in signal/data connection with the local proxy server 15. One or more of EIM, SM-DS and SM-DP+ module 16 are reachable over Internet Protocol from the local site 5.

The local site 5 is connected to the central site 8 via an internet connection 18. Such internet connection 18 may be established via the mobile network 2 and/or via LAN/WLAN.

In the Fig. 1 embodiment, the internet connection 18 establishes a connection between the local proxy 15 and the test probe 13. Further, the test probe 13 is connected via internet connection 19 with the eUICC unit 9 and with the central unit 10.

The managing system 7 further has a user terminal 20 which is via internet connection 21 in connection with the central unit 10. As is shown in Fig. 1, the user terminal 20 does not need to be located at the central site 8. Of course, such location of the user terminal 20 within the central site 8 is possible.

With the managing system 7 a method to download an eSIM profile from the local mobile network operator 6 to the respective eUICC card 11 hosted by the eUICC unit 9 is feasible. During such download method, an eSIM profile from the SM-DP+ module 16 is ordered. This may be done via use of a respective activation code or via upload of a QR code provided by the respective mobile network operator 6.

During the download method, optionally a VPN connection between the VPN client module 12 and the Local Proxy 15 is established. Then, the ordered eSIM profile is downloaded via the established VPN connection from the SM-DP+ module 16 or eIM via the LPA or alternatively IPA to a chosen eUICC card 11 hosted by the eUICC unit 9.

Via the established VPN connection, the geo location of the LPA/IPA of the eUICC unit 9 and/or of the test probe 13 and/or of the eUICC card 11 is masked by the local proxy server 15. Thus, the geo location of the respective VPN client module 12 at the central site 8 is not detectable by the SM-DP+ module 16.

The selectable download assistant module 12 of the eUICC unit 9, of the test probe 13 or of the eUICC card 11 may use an IoT profile assistant (IPA). This may be realized as an IPAd and/or as an IPAe according to the standard SGP.32 (https://www.gsma.com/solutions-and-impact/technologies/esim/wp-content/uploads/2023/05/SGP.32-1.0.1.pdf). In case of using an IPA, at the network operator's site, i.e. the local site 5 for the transmitting region 4, an eIM (eSIM IoT remote manager) is present which is signal/data connection with the SMDP+ module 16 and/or the local proxy 15.

The download method described above may be part of a method to test the respective mobile network 2 by use of the test system 1. During such test method, a respective test probe through which an ordered eSIM profile shall be downloaded is selected, for example the test probe 13 of Fig. 1. After this selection, the download method as described above is performed resulting in the assignment of the ordered eSIM to the selected eUICC card 11 hosted by the eUICC unit 9. Further, selected connectivity functions of the test probe 13 which may simulate/emulate a smartphone or an IoT device may be tested. During the steps of this test method, at least one key parameter indicator (KPI) is recorded. Such recorded KPI may later-on be analyze during the test method.

During the download method, the VPN connection may be established between the VPN client module 12 of the test probe 13 and the local proxy.

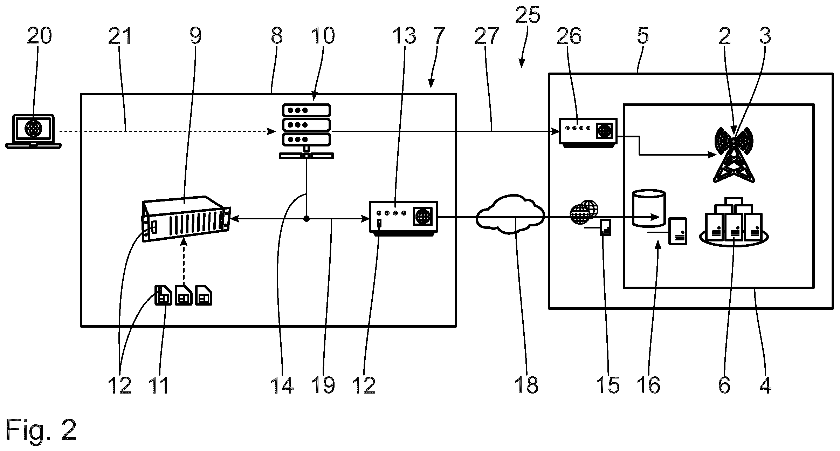

Fig. 2 shows a further embodiment of a test system 25 which may be used instead of the test system 1. Components and functions which already are described with respect to Fig. 1 are not again explained in detail.

The test system 25 further includes at least one test probe 26 at the local site 5. This local site test probe 26 is capable to connect with a respective transmitting station 3 of the mobile network 2 within the transmitting region 4.

The local site test probe 26 is connected to the central unit 10 via a IP (internet protocol) connection 27. This may be done via an IP connectivity access network, e.g. GPRS, EDGE, WLAN, DSL.

The local site test probe 26 provides a further local testing capability of the test system 25.

The test probe 26 includes a local profile assistant (LPA) or additionally a IoT profile Assistant (IPA). Such test probe 26 which may be part of the central site 8 is downloading the profile to the respective eUICC card 11 located in the eUICC unit 9. The test probe 26 is instructed to do so by central unit 10.

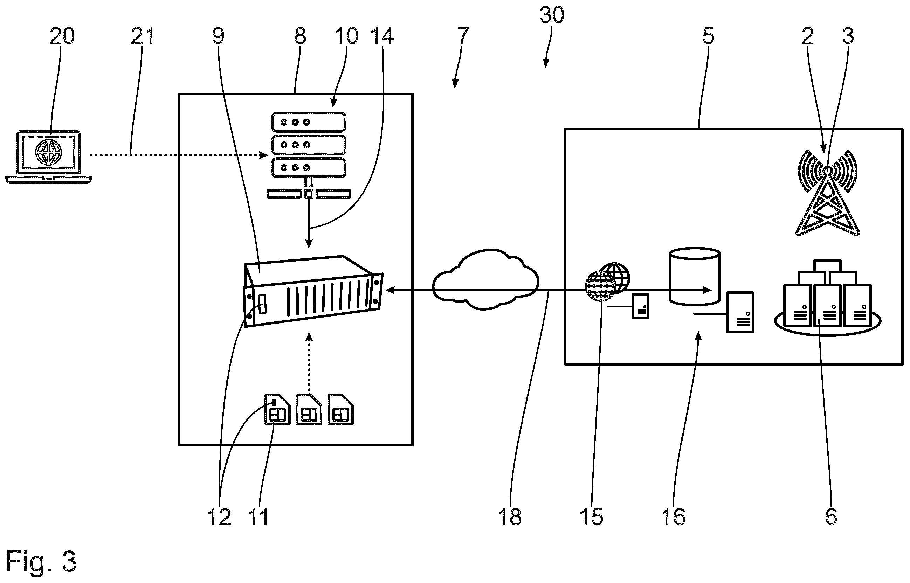

Fig. 3 shows another embodiment of a managing system 30 which may be used instead of the managing system 7. Components and functions which already are described with respect to Figs 1 and 2 are not again explained in detail.

In the managing system 30, a VPN connection from the VPN client module 12 of the eUICC unit 9 is established to the local proxy server 15 via the internet connection 18. In the managing system 30, no test probe is present as part of this VPN connection.

Further details of the system methods described above are apparent from the following further description:

### eSIMMUX (eUICC unit) - hosting and managing eUICC cards in a centralized location

The eUICC unit or eSIMMUX 9 is a hardware component that contains a configurable number of eUICC cards 11. The eUICC cards 11 may or may not have an eSIM profile installed. The eSIMMUX 9 may have two network connections, which typically are implemented as LAN or WLAN.

One network connection is used for Operation and Maintenance (O&M) and a second network connection may be used for Internet access. The Internet access may also be provided through a proxy, in cases where the eSIMMUX 9 cannot be directly connected to the Internet. The proxy may take the form of any networking equipment that is able to route IP packets between the eSIMMUX 9 and the Internet. The O&M interface is connected to the central unit 10 that is responsible for managing the eSIMMUX 9 and the eUICC cards 11. The central unit also maintains the state of the eUICC cards 11 in the eSIMMUX 9.

The eSIMMUX 9 may contain the LPA/IPA with optional VPN client module 12 which may be a Local Profile Assistant and/or IoT Profile Assistant (LPA/IPAd), a software part that is used for downloading and managing eSIM profiles. The LPA/IPAd uses the network connection with Internet access of the eSIMMUX 9 to connect to a SM-DP+ module or eIM 16 for performing eSIM profile managing operations, e.g. download, delete, enable or disable profile.

The LPA/IPAd is managed from the central unit, through the O&M interface of the eSIMMUX 9, using dedicated software and a user interface 20 or API. The software allows users to select an eUICC card 11 from the eSIMMUX 9, for example based on the eUICC ID (EID) and specify the profile managing operation that needs to be performed, together with relevant parameters. In addition to the above description, the following profile managing operations are possible:
- Download eSIM profile - the user selects an eUICC card 11 from the eSIMMUX 9 and - if applicable - inputs an activation code in the form of a string or QR code. A QR code scanner can be included as part of the User Interface 20. The configuration options, i.e. activation code is sent to the LPA/IPAd in the eSIMMUX 9 via the O&M interface. The LPA/IPAd will establish a connection to the SM-DP+ module 16 that provides the eSIM profile associated with the activation code or to the Subscription Manager Discovery Server (SM-DS) or to the default SM-DP+ module 16 or eSIM IoT Remote Manager (eIM) and perform a profile download. Optionally, the profile can also be enabled right after download. The central unit will update the status of the eUICC.
- List eSIM profile - the user selects an eUICC card 11 from the eSIMMUX 9 identified by its EID and gets an output of the eSIM profiles available on the eUICC card 11 together with and their status.
- Enable eSIM profile - the user selects an eUICC card 11 from the eSIMMUX 9 identified by its EID and also selects a profile from the eUICC card 11 to enable, identified by the profile's ICCID. The central unit will update the status of the eUICC.
- Disable eSIM profile - the user selects an eUICC card 11 from the eSIMMUX 9 identified by its EID and also selects a profile from the eUICC card 11 to disable, identified by the profile's ICCID. The central unit will update the status of the eUICC.
- Delete eSIM profile - the user selects an eUICC card 11 from the eSIMMUX 9 identified by its EID and also selects a profile from the eUICC card 11 to delete, identified by the profile's ICCID. The central unit will update the status of the eUICC.

The eSIMMUX 9 can be part of a distributed active test system, in particular as described above with respect to the test systems 1 and 25. When part of such system, the O&M interface of the eSIMMUX 9 is used to establish an IP connection from a remote test probe, e.g. from test probe 13 and/or from test probe 26, that emulates a user equipment (UE) for test purposes. The IP connection is used to transfer data between an eUICC card 11 from the eSIMMUX 9 and the test probe 13, 26. The test probe 13, 26 is thus able to authenticate and establish a connection to the mobile network 2, even though the eUICC card 11 is not physically present at the location of the test probe 13, 26. Any eUICC card 11 from the eSIMMUX 9 can be selected for this purpose.

### Downloading and managing eSIM profiles in the eSIMMUX with proxy (geographical location simulation)

The eSIMMUX 9 uses a network connection, e.g. LAN or WLAN, with Internet access to download eSIM profiles from the SM-DP+ module 16 (if applicable through other components such as an SM-DS or eIM) or alternatively through a proxy that has an Internet connection. This means that the download will be performed from the same IP address (location) regardless of the eSIM profile or the SM-DP+ module 16 that is being accessed. However, in some cases, eSIM profile downloads may be limited to a particular region or country. For such scenarios the eSIMMUX 9 may contain software that is used to simulate the geographic location from which the download is performed. The software can be in the form of a VPN client module 12 and the eSIMMUX 9 with a VPN client module 12 can be referred to as an eSIMMUX 9 with proxy.

When using a proxy, the VPN client installed on the eSIMMUX 9 can be configured to establish an IP connection to a server hosted in a different location than the location where the eSIMMUX 9 is physical present. This server, to which the IP connection is established, is the local proxy server 15. Thus, it will appear to the eIM/SM-DP+/SM-DS that the eSIM profile download which is done using the LPA/IPAd at the eSIMMUX 9 is instead being performed from the location that the VPN connects to. After the VPN client is connected, the same profile managing operations as described in the previous section can be performed by the eSIMMUX 9.

### Downloading and managing eSIM Profiles in the eSIMMUX with distributed LPA/IPAd in an active test system

When the eSIMMUX 9 is being used as part of an active testing system, the LPA/IPAd component can be installed on the distributed test probe 13, 26. In this case, the location of the test probe 13, 26 is the location from which the eSIM profile download is being performed. When the LPA/IPAd is installed on the test probe 13, 26, the O&M connection of the eSIMMUX 9 is used to establish an IP connection between the eUICC card 11 in the eSIMMUX 9 and the LPA/IPAd in the test probe 13, 26.

The test probe 13, 26 can be equipped with various connectivity interfaces, e.g. 5G, LTE, LAN, WLAN These interfaces provide Internet access, through which the LPA/IPAd accesses the eIM/SM-DP+/SM-DS module 16 and performs eSIM profile operations. The same operations as described in Section 2 can be performed by the eSIMMUX 9.

### Method for testing Remote SIM Provisioning for Consumer devices using the eSIMMUX or distributed test probes with LPA/IPAd

When the eSIMMUX 9 is part of an active test system, an RSP (remote SIM provisioning) process can be tested using the eSIMMUX 9 and the components of the active test system 1, 25.

In Particular, a method to test SGP.22 and SGP.32 RSP using the eSIMMUX 9 and one or more distributed test probes 13, 26 is provided. This method has the advantage that it decouples the eUICC / eSIM from the test probe 13, 26 and the LPA/IPAd from the location of both the test probe 13, 26 and the eUICC card 11. The solution introduces more flexibility in the testing process and allows users of such test systems to manage and utilize the eSIMs independently of the locations of the test probes 13, 26.

The RSP process for SGP.22 consumer can be tested using a test sequence that reproduces the steps that a user accessing this service from a mobile network operator 6 will perform. Before the test is performed, an eSIM profile needs to be available in the RSP platform and the user of the test system 1, 25 must have a QR or activation code for the profile.

The test can be executed in two ways:
1. Using the eSIMMUX 9 with or without a proxy, as described in Section "Downloading and managing eSIM profiles... with proxy..."
2. Using the eSIMMUX 9 and a distributed test probe 13, 26 that contains the LPA/IPAd, as described in Section Downloading and managing eSIM profiles... with distributed LPA/IPAd..."

In both cases, the following steps may be performed to test the RSP operation:
- Selecting an eUICC card 11 from the eSIMMUX 9
- Selecting a test interface through which the eSIM profile download will be performed
- Configuring the activation code for the eSIM profile download or uploading a QR code

After the test sequence is configured, the following actions are performed:
- The LPA/IPAd authenticates and connects to an SM-DP+ module 16 over the ES9+ interface or an eIM. The address of the SM-DP+ module 16 may be extracted from the activation or QR code provided by the user.
- The profile identified by the activation code is downloaded and measurements may be recorded. Any errors registered during the download may be recorded.
- The test sequence ends with three possible states: *success* if the eSIM profile was correctly downloaded, *fail* if there was an error during the process or *inconclusive* if the result of the test cannot be determined.

The downloaded eSIM profile is available in the eSIMMUX 9, on the eUICC card 11 that was selected during the configuration of the test.

Further profile managing operations may be performed using this eUICC card 11 / eSIM profile.

The test sequence may produce the following KPIs:
- **StartImsi:** a readout of the old imsi (might not exist if blank chipSIM used)
- **provisionedImsi:** the new IMSI by the provisioning testcase
- **smdpPlusAddress:** Address of the SM-DP+ server used.
- **profileDownloadStartTime:** Time when profile download over ES9+ started.
- **profileDownloadEndTime:** Time when profile download over ES9+ finished.
- **deliveredNotificationTime:** Time notification was sent to SM-DP+ (if applicable).
- **es9PlusSuccess:** Indicates successful communication with SM-DP+.
- **end2endSuccess:** Indicates overall success of the provisioning and activation (if applicable) and notification (if applicable) process.
- **provisioningDuration:** end2end duration of overall process, i.e. time duration between the first HTTP message to the SM-DP+ and the finish of the download profile
- **provisionedIccid:** Unique identifier of the provisioned profile.
- **provisionedProfileName:** Name of the downloaded profile.
- **provisionedServiceProviderName:** Name of the service provider for the downloaded profile.
- **provisioned_SimCards_Country:** derived from IMSI
- **provisioned_SimCards_PLMN:** derived from IMSI

Additionally, the following results can be made available:
- eSIM profiles on eUICC as JSON
- PCAPs shall be recorded of (decrypted) https traffic between LPA/IPAd and SM-DP+
- PCAPs shall be recorded of traffic between LPA/IPAd and eSIM - Decoded (if available) logs shall be kept of the provisioning dialog
- LPA/IPAd Client interaction log

### Method for testing mobile services in geographically distributed locations using eSIMs hosted in a centralized location (eSIM Multiplexer)

When the eSIMMUX 9 is part of an active test system 1, 25 it may be used for active testing of mobile services, in geographically distributed locations, using specialized test probes and test sequences In such a system, the eSIMMUX 9 may manage the eUICC cards 11 and eSIM profiles in a central location, enabling the separation between the test probe 13, 26 and the subscription (eSIM profile) used for the test sequence. The test probe 13, 26 acts as a UE / mobile towards the mobile network 2. This separation is particularly relevant in roaming scenarios, where a mobile service may be tested in different countries, using the same eSIM profile, without re-downloading the profile in each location.

The eSIMMUX 9 may be used to test any mobile service that is provisioned on the eSIM that is selected for the test. In this respect, the eSIMMUX 9 and the method to utilize the eUICC card 11 / eSIMs from the eSIMMUX 9 is independent of the service that is tested.

The test sequence may be configured via a User Interface or API. At the start of the test sequence, a user selects an eUICC card 11 from the eSIMMUX 9, which will be used to perform the test for the service, e.g. data test, voice test, messaging test. The eUICC card 11 must contain an active eSIM profile (subscription), which was downloaded using the mechanisms described in the previous sections. The O&M interface of the eSIMMUX 9 is then used to establish an IP connection with the test probe 13, 26. The test probe 13, 26 may be arbitrary located in the coverage area of the mobile operator 6 for which the service is tested. Through this connection, the test probe 13, 26, which is the equivalent of an UE / mobile terminal equipment communicates with the eUICC card 11 hosted remotely in the eSIMMUX 9 to perform the standardized authentication and network access procedures. After the test probe 13, 26 is authenticated towards the mobile network 2, the mobile service test is performed and KPIs and result files related to the tested service are generated. At the end of the test sequence, the eUICC card 11 and associated eSIM profile is released and made available for other test sequences, using any test probe 13, 26 that is connected to the active test system 1, 25.

### Method for Testing SGP.32 with IPAd (IPA implemented in software on test probe, Smartphone, eSIMMUX or other test device)

1a) Test Profile enabling of an IPA initiated Profile download from SM-DP+ module 16 using
   ∘ an activation code
   ∘ information retrieved by eIM/IPA from SM-DS
   ∘ default SM-DP+ module of eUICC card

   - The IPA sends a Profile download request to SM-DP+ module 16, if applicable in an indirect request via the eIM
   - The IPA forwards messages between eIM, SM-DP+ module 16 and eUICC card 11
   - The IPA sends a request to enable the new profile to eUICC card 11
   - The test system 1, 25 monitors output of the IPA and other components and extracts KPIs like durations between requests and responses, total duration of the process, success/failure and error or info messages.
2a) Test eIM initiated Profile download and Profile state managing
   - A test probe 13, 26 shall, for example through a Smartphone App or APIs, trigger a business process which will cause the eIM to send a signed eIM/eUICC package to the IPA
   - The IPA is issued a command to retrieve messages and then will forward messages between eIM, SM-DP+ module 16 and eUICC card 11
   - The eUICC card 11 in the eSIMMUX 9 shall verify and execute eIM/eUICC packages
   - The test system 1, 25 monitors output of the IPA and other components and extracts KPIs like durations between requests and responses, total duration of the process, success/failure and error or info messages.
   - The system can verify if the operation was successful by checking the presence and state of the profile on the eUICC card 11.
3a) Test eIM initiated eIM managing and eIM association with eUICC card 11
   - A test probe 13, 26 shall trigger a business process which will cause the eIM to send a signed eUICC package to the IPA
   - The IPA is issued a command to retrieve messages and then will forward messages between eIM, SM-DP+ module 16 and eUICC
   - The eUICC card 11 in the eSIMMUX 9 shall verify and execute the eUICC package
   - The test system monitors output of the IPA and other components and extracts KPIs like durations between requests and responses, total duration of the process, success/failure and error or info messages.
   - The test system 1, 25 can verify if the operation was successful by listing the associated eIM and testing profile enabling, using procedures like those described in 1a) and 2a)

### Testing SGP.32 in case of IPAe (IPA part of eUICC)

1b) Test Profile enabling of an IPAe initiated Profile download from SM-DP+ module 16 using
   ∘ an activation code
   ∘ information retrieved by eIM/IPAe from SM-DS
   ∘ default SM-DP+ module of eUICC card

   - A test probe 13, 26 or device issues command to perform a profile download to IPAe
   - The IPAe sends a Profile download request to SM-DP+ module 16, if applicable in an indirect request via the eIM
   - The IPAe on the eUICC card 11 forwards messages between eIM, SM-DP+ module 16 and eUICC card 11
   - The IPAe sends a request to enable the new profile to eUICC
   - The test system 1, 25 monitors output of the test probes modem chipset or device components and extracts KPIs like durations between requests and responses, total duration of the process, success/failure and error or info messages.
2b) Test eIM initiated Profile download and Profile state managing
   - A test probe 13, 26 shall, for example through a Smartphone App or APIs, trigger a business process which will cause the eIM to send a signed eIM/eUICC package to the IPAe.
   - Another test probe 13, 26 or the same test probe 13, 26 shall interact with the eUICC either directly or through a modem chipset and assure IP connectivity. It issues a command to the IPAe to connect to the eIM.
   - The IPAe on the eUICC card 11 forwards messages between eIM, SM-DP+ module 16 and eUICC card 11
   - The test system 1, 25 monitors output of the test probes modem chipset or device components and extracts KPIs like durations between requests and responses, total duration of the process, success/failure and error or info messages.
   - The test system 1, 25 can optionally verify if the operation was successful by checking the presence and state of the profile on the eUICC card 11.
3b) Test eIM initiated eIM managing and eIM association with eUICC card 11
   - A test probe 13, 26 shall trigger a business process which will cause the eIM to send a signed eUICC Package to the IPAe
   - The IPAe forwards messages between eIM, SM-DP+ module 16 and eUICC card 11
   - The eUICC card 11 in the eSIMMUX 9 shall verify and execute the eUICC package
   - The test system 1, 25 monitors output of the IPAe and other components and extracts KPIs like durations between requests and responses, total duration of the process, success/failure and error or info messages.
   - The test system 1, 25 can optionally verify if the operation was successful by listing the associated eIM and testing profile enabling, using procedures like those described in 1b) and 2b)

## Claims

1. Managing system (7) for eSIM profiles
- having, at a central site (8)
-- an eUICC unit (9) capable to host a multitude of eUICC cards (11), the eUICC unit (9) being in signal connection with a selectable download assistant module (12),
-- a central unit (CU, 10) being in connection with the eUICC unit (9) to manage the eUICC unit (9),
- wherein the download assistant module (12) is embodied to establish a connection with a network component (16) of a mobile network (2) at a local site,
- wherein the local site (5) is connected to the central site (8) via an internet connection (18).

2. Managing system according to claim 1, having a user terminal (20) which is in signal connection (21) with the CU (10).

3. Managing system according to claims 1 or 2, wherein the download assistant module (12) is part of the eUICC unit (9).

4. Managing system to one of claims 1 to 3, wherein the download assistant module (12) is part of the eUICC card (11).

5. Test system (1; 25) for a mobile network (2) including a managing system (7) according to one of claims 1 to 4, further having at least one test probe (13; 26) being in signal connection with the central unit (10) of the managing system (7) and with the mobile network (2).

6. Test system according to claim 5, wherein the test probe (13; 26) is in signal connection with the eUICC unit (9).

7. Test system according to claim 5 or 6, wherein the VPN client module (12) is part of the test probe (13).

8. Test system according to one of claims 5 to 7, wherein the test probe (13) is located at the central site (8).

9. Test system according to one of claims 5 to 8, wherein the test probe (26) is located at the local site (5).

10. Method to download an eSIM profile from a mobile network operator (6) to an eUICC card (11) using a managing system (7) according to one of claims 1 to 4 or using a test system (1; 25) according to one of claims 5 to 9, having the following steps:
- ordering an eSIM profile from a mobile network operator,
- selecting a download assistant module (12) from a plurality of available download assistant modules,
- establishing a connection between the managing system (7) and a network component (16) operated by the mobile network operator,
- downloading the ordered eSIM profile via the established connection via the selected download assistant module from the network component (16) operated by the mobile network operator to a designated eUICC card (11) hosted by the eUICC unit (9).

11. Download method according to claim 10 using an IPA (IoT profile assistant) as the download assistant module.

12. Method to test a mobile network (2) including the download method according to claims 10 or 11 and using the test system (1; 25) according to one of claims 5 to 9, with the following steps:
- selecting at least one test probe (13, 26) where the eSIM profile shall be used,
- performing the download method,
- recording at least one key parameter indicator (KPI) during test method steps.

13. Test method according to claim 12 using a test system according to claim 7, wherein during the download method, a VPN connection is established between the VPN client module (12) of the test probe (13) and the local proxy (15) to tunnel traffic to network elements operated by the mobile network operator.
